# EUROPÄISCHE PATENTANMELDUNG

(11) **EP 1 816 410 A1**
(43) Veröffentlichungstag der Anmeldung: **08.08.2007**
(21) Anmeldenummer: 07001662.1
(22) Anmeldetag: 26.01.2007
(51) Int. Cl.: F24F 5/00

(54) **Verfahren und Vorrichtung zur Kühlung eines Zuluftstroms mittels Befeuchtung von Fortluft**

(30) Priorität: 01.02.2006 DE 102006004513
(71) Anmelder: Klingenburg GmbH, 45968 Gladbeck (DE)
(72) Erfinder: Westerdorf, Thomas, 44795 Bochum (DE); Klingenburg, Hans, 45239 Essen (DE)
(74) Vertreter: Lelgemann, Karl-Heinz

(57) **Zusammenfassung**

Bei einem Verfahren zur Kühlung eines Zuluftstroms (2) und einer entsprechenden Kühlvorrichtung (1) zur Durchführung dieses Verfahrens wird der Zuluftstrom (2) durch einen Wärmeaustauscher (3) geleitet und im Wärmeaustauscher (3) mittels eines Fortluftstroms (9) abgekühlt.

Zur Erhöhung der Leistung des Wärmeaustauschers (3) wird vorgeschlagen, dass der Fortluftstrom (9) - in seiner Strömungsrichtung gesehen - stromauf des Wärmeaustauschers (3) adiabat befeuchtet und mit Feuchtigkeit übersättigt wird.

## Beschreibung

Die Erfindung bezieht sich auf ein Verfahren zur Kühlung eines Zuluftstroms, bei dem der Zuluftstrom durch einen Wärmeaustauscher geleitet und im Wärmeaustauscher mittels eines Fortluftstroms abgekühlt wird.

Eine entsprechende Kühlvorrichtung zur Kühlung eines Zuluftstroms hat einen Wärmeaustauscher, der vom Zuluftstrom durchströmt wird und in dem der Zuluftstrom mittels eines den Wärmeaustauscher durchströmenden Kühlluftstroms abkühlbar ist.

Derartige Kühlvorrichtungen bzw. entsprechende Verfahren werden eingesetzt, um insbesondere Innenräume aller Art - je nach Anforderungsprofil - zu temperieren.

Ausgehend von dem vorstehend geschilderten Stand der Technik liegt der Erfindung die Aufgabe zugrunde, ein Verfahren zur Kühlung eines Zuluftstroms bzw. eine entsprechende Kühlvorrichtung zu entwickeln, bei dem bzw. der höhere Kühlleistungen der eingesetzten Wärmeaustauscher erreicht werden können.

Diese Aufgabe wird erfindungsgemäß durch ein Verfahren zur Kühlung eines Kühlluftstroms gelöst, bei dem der Fortluftstrom - in seiner Strömungsrichtung gesehen - stromauf des Wärmeaustauschers adiabat befeuchtet und mit Feuchtigkeit übersättigt wird. Eine entsprechend zur Lösung der genannten Aufgabe erfindungsgemäß ausgebildete Kühlvorrichtung zur Kühlung eines Zuluftstroms hat eine Befeuchtungseinrichtung, mittels der der Kühlluftstrom - in seiner Strömungsrichtung gesehen - stromauf des Wärmeaustauschers adiabat befeucht- und mit Feuchtigkeit übersättigbar ist. Durch die Übersättigung des bereits befeuchteten Kühlluftstroms mit weiterer Feuchtigkeit enthält der Kühlluftstrom, bevor er in den wärmeaustauscher eintritt, feinste Wassertröpfchen, die mit dem Kühlluftstrom in den Wärmeaustauscher eintreten und dort verdunsten. Die hierzu erforderliche Wärmeenergie wird der Werkstoffmatrix des Wärmeaustauschers entzogen und trägt entsprechend zur zusätzlichen Kühlung des ebenfalls den Wärmeaustauscher durchströmenden Zuluftstroms bei. Im Vergleich zu einer lediglich adiabaten Befeuchtung des Kühlluftstroms ohne Übersättigung lassen sich im Falle des erfindungsgemäßen Verfahrens bzw. der erfindungsgemäßen Vorrichtung in erheblicher Weise erhöhte Kühlleistungen des im Verfahren bzw. bei der Vorrichtung eingesetzten Wärmeaustauschers erzielen.

Der bei dem erfindungsgemäßen Verfahren bzw. in der erfindungsgemäßen Vorrichtung eingesetzte Wärmeaustauscher kann vorteilhaft als Rotationswärmeaustauscher ausgebildet werden.

Alternativ ist es möglich, den Wärmeaustauscher als Plattenwärmeaustauscher
auszugestalten, wobei dann die Zuström- bzw. Abströmbereiche für den Zuluftstrom bzw. den Kühlluftstrom entsprechend zu gestalten sind.

Als Kühlluftstrom kann Abluft, Außenluft, insbesondere bereits gekühlte, rezirkulierte Außenluft bzw. eine Mischung aus Abluft und/oder Außenluft und/oder bereits gekühlter, rezirkulierter Außenluft eingesetzt werden.

Das erfindungsgemäße Verfahren lasst sich bei hohem Wirkungsgrad besonders vorteilhaft ausgestalten, wenn dem Zuluftstrom - in seiner Strömungsrichtung gesehen - stromab des Wärmeaustauschers ein Teilluftstrom entnommen wird, dieser Teilluftstrom zu einer Befeuchtungseinrichtung geführt wird, dort adiabat befeuchtet und mit Feuchtigkeit übersättigt wird und dann als Kühlluftstrom durch den Wärmeaustauscher geleitet wird. Bei einer entsprechend vorteilhaft gestalteten Vorrichtung ist als Zuluftstrom ein Außenluftstrom vorgesehen, wobei in Strömungsrichtung des Zuluftstroms gesehen stromab des Wärmeaustauschers eine Abzweigeinrichtung vorgesehen ist, mittels der dem Außen- bzw. Zuluftstrom ein Teilluftstrom entnehmbar ist, wobei der Teilluftstrom zur Befeuchtungseinrichtung führ- dort adiabat befeucht- und mit Feuchtigkeit übersättigbar und dann als Kühlluftstrom durch den Wärmeaustauscher leitbar ist. Der dem Zuluftstrom nicht mit dem Teilluftstrom entnommene Anteil steht dann als gekühlte Zuluft für Temperierungszwecke zur Verfügung.

Als besonders vorteilhaft hat sich eine Verfahrensweise erwiesen, bei der dem Zuluftstrom stromab des Wärmeaustauschers ca. 30 % als Teilluftstrom entnommen werden.

Ein entsprechend zweckmäßig und vorteilhaft ausgestalteter Rotationswärmeaustauscher, der bei einer derartigen Kühlvorrichtung bzw. einem derartigen Verfahren zum Einsatz kommt, sollte vorteilhaft einen Strömungssektor für den Kühlluftstrom von ca. 60 Grad bis 120 Grad, vorzugsweise von 90 Grad, aufweisen, so dass sich in etwa gleiche Strömungsgeschwindigkeiten für den Außen- bzw. Zuluftstrom einerseits und den Kühlluft- bzw. Fortluftstrom andererseits ergeben.

Entsprechend ergibt sich eine besonders vorteilhafte Ausgestaltung der erfindungsgemäßen Kühlvorrichtung, wenn die Größe des dem Kühlluftstrom zugeordneten Strömungssektors so an den Anteil des Teilluftstroms am Zuluftstrom angepasst ist, dass die Strömungsgeschwindigkeit des Außenluft- bzw. Zuluftstroms im Rotationswärmeaustauscher der des Kühlluftstroms entspricht.

Im Folgenden wird die Erfindung anhand von Ausführungsformen unter Bezugnahme auf die Zeichnung näher erläutet.

Es zeigen:
- Figur 1: eine prinzipielle Darstellung einer ersten Ausführungsform einer erfindungsgemäßen Kühlvorrichtung zur Kühlung eines Zuluftstroms;
- Figur 2: eine prinzipielle Darstellung einer weiteren Ausführungsform einer erfindungsgemäßen Kühlvorrichtung zur Kühlung eines Zuluftstroms; und
- Figur 3: eine Vorderansicht eines Rotationswärmeaustauschers zum Einsatz in einer erfindungsgemäßen Kühlvorrichtung zur Kühlung eines Zuluftstroms.

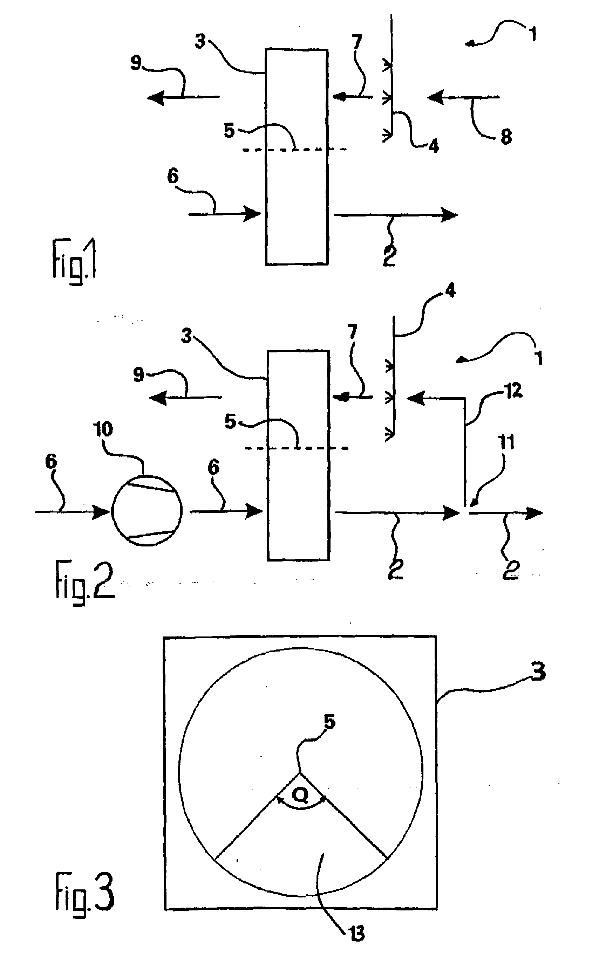

Eine in Figur 1 anhand einer Prinzipdarstellung gezeigte erfindungsgemäße Kühlvorrichtung 1 zur Kühlung eines Zuluftstroms 2, der in Figur 1 durch einen Pfeil dargestellt ist, hat einen Wärmeaustauscher 3 und eine Befeuchtungseinrichtung 4.

Der Wärmeaustauscher 3 ist z.B. als Rotationswärmeaustauscher ausgebildet, der um eine in Figur 1 durch eine Strichlinie angedeutete Rotationsachse 5 drehbar ist.

Ein in Figur 1 in seiner Strömungsrichtung vor dem Rotationswärmeaustauscher 3 gezeigter Außenluftstrom 6 wird im Rotationswärmeaustauscher 3 gekühlt und dann als Zuluftstrom 2 weitergeführt.

Die Kühlung des Außenluft- 6 bzw. Zuluftstroms 2 erfolgt mittels der Werkstoffmatrix des Rotationswärmeaustauschers 3, der sich um die Rotationsachse 5 dreht. Die zur Kühlung des Außenluft- 6 bzw. Zuluftstroms 2 erforderliche Kälteenergie wird dem Rotationswärmeaustauscher 3 mittels eines Kühlluftstroms 7 zugeführt.

Zur Erzeugung des Kühlluftstroms 7 wird bei der in Figur 1 gezeigten Ausführungsform der erfindungsgemäßen Kühlvorrichtung 1 ein Abluftstrom 8 durch die Befeuchtungseinrichtung 4 geführt und dort adiabat befeuchtet und hierdurch gekühlt. Der befeuchtete Abluftstrom 7 wird in der Befeuchtungseinrichtung 4 des Weiteren übersättigt und enthält somit stromab der Befeuchtungseinrichtung 4 feinste Wassertröpfchen. Stromab der Befeuchtungseinrichtung 4 bildet der Abluftstrom 8 den Kühlluftstrom 7. Mit dem Kühlluftstrom 7 wird die in Form feinster Wassertröpfchen in ihm befindliche Feuchtigkeit zum Rotationswärmeaustauscher 3 befördert, wo die wassertröpfchen verdunsten. Die für den Verdunstungsvorgang erforderliche Verdunstungswärme wird der Werkstoffmatrix des Rotationswärmeaustauschers 3 entzogen, so dass die Werkstoffmatrix des Rotationswärmeaustauschers 3 beim Verlassen des durch den Kühlluftstrom 7 durchströmten Sektor des Rotationswärmeaustauschers 3 erheblich gekühlt ist und in diesem kühlen Zustand in denjenigen Strömungssektor des Rotationswärmeaustauschers 3 eintritt, der durch den Außen- 6 bzw. Zuluftstrom 2 durchströmt wird.

Der auf der Ausgangsseite des Rotationswärmeaustauschers 3 bzw. seines dem Kühlluftstrom 7 zugeordneten Strömungssektors austretende Kühlluftstrom 7 wird als Fortluftstrom 9 vom Rotationswärmeaustauscher 3 weggeführt. Ein erheblicher Teil der in den Kühlluftstrom 7 eingeleiteten Kälteenergie verbleibt in der Werkstoffmatrix des Rotationswärmeaustauschers 3.

Dort dient die in der Werkstoffmatrix des Rotationswärmeaustauschers 3 gespeicherte Kälteenergie dazu, den Außenluft- 6 bzw. Zuluftstrom 2 zu kühlen.

Aufgrund der Übersättigung des Abluft- 8 bzw. Kühlluftstroms 7 in der Befeuchtungseinrichtung 4 lassen sich im Rotationswärmeaustauscher 3 hohe Kühlleistungen erzielen.

In Abweichung zu dem anhand von Figur 1 erläuterten Ausführungsbeispiel der Kühlvorrichtung 1 kann statt eines Rotationswärmeaustauschers 3 auch ein Plattenwärmeaustauscher eingesetzt werden, wobei dann die An- und Abströmbereiche der Außen- bzw. Zuluft und Ab- bzw. Fortluft entsprechend zu gestalten sind.

Bei der in Figur 2 gezeigten Ausführungsform der erfindungsgemäßen Kühlvorrichtung 1 weist diese neben dem Rotationswärmeaustauscher 3 und der Befeuchtungseinrichtung 4 eine Fördereinrichtung 10 und eine Abzweigeinrichtung 11 auf.

Die Fördereinrichtung 10 ist beispielsweise als Lüfter, Ventilator od.dgl. ausgestaltet und pumpt und richtet den Außenluftstrom 6 auf den für diesen vorgesehenen Strömungssektor des Rotationswärmeaustauschers 3. Im Rotationswärmeaustauscher 3 wird der Außenluftstrom 6 durch die in der Werkstoffmatrix des Rotationswärmeaustauschers 3 gespeicherte Kälteenergie gekühlt; der Außenluftstrom 6 tritt als gekühlter zuluftstrom 2 aus dem ihm zugeordneten Strömungssektor des Rotationswärmeaustauschers 3 aus. In seiner Strömungsrichtung gesehen stromab des Rotationswärmeaustauschers 3 durchströmt der gekühlte Zuluftstrom 2 die Abzweigeinrichtung 11, in der dem Zuluftstrom 2 ein Teilluftstrom 12 entnommen wird. Der Teilluftstrom 12 besteht entsprechend aus gekühlter Außenluft. Stromab der Abzweigeinrichtung 11 wird der Teilluftstrom 12 der Befeuchtungseinrichtung 4 zugeführt, wo der bereits gekühlte Teilluftstrom 12 adiabat befeuchtet und dann übersättigt wird. Stromab der Befeuchtungseinrichtung 4 bildet der adiabat befeuchtete und übersättigte Teilluftstrom 12 den Kühlluftstrom 7, der in dem ihm zugeordneten Strömungssektor in den Rotationswärmeaustauscher 3 eintritt. Beim Durchtritt durch den Rotationswärmeaustauscher wird aufgrund der Verdunstung der im Kühlluftstrom 7 vorhandenen Feuchtigkeit bzw. der feinsten Wassertröpfchen Kälteenergie in die Werkstoffmatrix des Rotationswärmeaustauschers eingeleitet, wobei die Kälteenergie dann in demjenigen Strömungssektor des Rotationswärmeaustauschers 3, der dem Außenluft- 6 bzw. Zuluftstrom 2 zugeordnet ist, dazu verwendet wird, den Außenluft- 6 bzw. Zuluftstrom 2 zu kühlen.

Die Abzweigeinrichtung 11 kann so gestaltet sein, dass sie aus dem Zuluftstrom 2 etwa 30 % der Zuluft entzieht und als Teilluftstrom 12 der Befeuchtungseinrichtung 4 zuführt. Cirka 70 % des Außen- 6 bzw. Zuluftstroms 2 steht stromab der Abzweigeinrichtung 11 als Zuluftstrom 2 zur Verfügung.

Bei dem in Figur 3 gezeigten Ausführungsbeispiel eines in der erfindungsgemäßen Kühlvorrichtung 1 zum Einsatz kommenden Rotationswärmeaustauschers 3 wird der adiabat befeuchtete und mit Feuchtigkeit übersättigte Teilluftstrom 12 als Kühlluftstrom 7 in einen durch den Winkel Q begrenzten Strömungssektor 13 des Rotationswärmeaustauschers 3 geführt. Hierbei handelt es sich um einen Strömungssektor, der sich über 60 bis 120 Grad, vorzugsweise 90 Grad, wie durch den Winkel Q angezeigt, des Rotationswärmeaustauschers 3 erstreckt. Bei einer entsprechenden Bemessung des dem Teilluftstrom 12 bzw. Kühlluftstrom 7 zugeordneten Strömungssektors 13 ergeben sich für den Rotationswärmeaustauscher 3 etwa gleiche Strömungsgeschwindigkeiten für den Außen- 6 bzw. Zuluftstrom 2 einerseits und den Teilluft- 12, Kühlluft- 7 bzw. Fortluftstrom 9.

## Patentansprüche

1. Verfahren zur Kühlung eines Zuluftstroms (2), bei dem der Zuluftstrom (2) durch einen wärmeaustauscher (3) geleitet und im Wärmeaustauscher (3) mittels eines Fortluftstroms (9) abgekühlt wird, **dadurch gekennzeichnet, dass** der Fortluftstrom (9) - in seiner Strömungsrichtung gesehen - stromauf des wärmeaustauschers (3) adiabat befeuchtet und mit Feuchtigkeit übersättigt wird.

2. Verfahren nach Anspruch 1, bei dem der Zuluft- (2) und der Kühl- (7) bzw. Fortluftstrom (9) durch einen Rotationswärmetauscher (3) geleitet werden.

3. Verfahren nach Anspruch 1, bei dem der Zuluft- (2) und der Kühl- (7) bzw. Fortluftstrom (9) durch einen Plattenwärmeaustauscher geleitet werden.

4. Verfahren nach einem der Ansprüche 1 bis 3, bei dem als Kühlluft Abluft eingesetzt wird.

5. Verfahren nach einem der Ansprüche 1 bis 3, bei dem als Kühlluft Außenluft eingesetzt wird.

6. Verfahren nach Anspruch 5, bei dem als Kühlluft bereits gekühlte, rezirkulierte Außenluft eingesetzt wird.

7. Verfahren nach einem der Ansprüche 1 bis 6, bei dem als Kühlluft eine Mischung aus Abluft und/oder Außenluft und/oder bereits gekühlter, rezirkulierter Außenluft eingesetzt wird.

8. verfahren nach Anspruch 6 oder 7, bei dem dem Zuluftstrom (2) - in seiner Strömungsrichtung gesehen - stromab des Wärmeaustauschers (3) ein Teilluftstrom (12) entnommen wird, der Teilluftstrom (12) zu einer Befeuchtungseinrichtung (4) geführt, dort adiabat befeuchtet und mit Feuchtigkeit übersättigt und dann als Kühlluftstrom (7) durch den Wärmeaustauscher (3) geleitet wird.

9. Verfahren nach Anspruch 8, bei dem dem Zuluftstrom (2) stromab des Wärmeaustauschers (3) ca. 30 % als Teilluftstrom (12) entnommen werden.

10. Kühlvorrichtung zur Kühlung eines Zuluftstroms (2), mit einem Wärmeaustauscher (3), der vom Zuluftstrom (2) durchströmt wird und in dem der Zuluftstrom (2) mittels eines den wärmeaustauscher (3) durchströmenden Kühlluftstroms (7) abkühlbar ist, **gekennzeichnet durch** eine Befeuchtungseinrichtung (4), mittels der der Kühlluftstrom (7) - in seiner Strömungsrichtung gesehen - stromauf des Wärmeaustauschers (3) adiabat befeucht- und mit Feuchtigkeit übersättigbar ist.

11. Kühlvorrichtung nach Anspruch 10, bei der der wärmeaustauscher (3) als Rotationswärmeaustauscher ausgebildet ist.

12. Kühlvorrichtung nach Anspruch 10, bei der der Wärmeaustauscher (3) als Plattenwärmeaustauscher ausgebildet ist.

13. Kühlvorrichtung nach einem der Ansprüche 10 bis 12, bei der der Kühlluftstrom (7) aus Abluft gebildet ist.

14. Kühlvorrichtung nach einem der Ansprüche 10 bis 12, bei der der Kühlluftstrom (7) aus Außenluft gebildet ist.

15. Kühlvorrichtung nach Anspruch 14, bei der der Kühlluftstrom (7) aus bereits gekühlter, rezirkulierter Außenluft gebildet ist.

16. Kühlvorrichtung nach Anspruch 15, bei der als Zuluftstrom (2) ein Außenluftstrom (6) vorgesehen ist, in Strömungsrichtung des Zuluftstroms (2) gesehen stromab des Wärmeaustauschers (3) eine Abzweigeinrichtung (11) vorgesehen ist, mittels der dem Außen- (6) bzw. Zuluftstrom (2) ein Teilluftstrom (12) entnehmbar ist, und der Teilluftstrom (12) zur Befeuchtungseinrichtung (4) führ-, dort adiabat befeucht- und mit Feuchtigkeit übersättigbar und dann als Kühlluftstrom (7) durch den Wärmeaustauscher (3) leitbar ist.

17. Kühlvorrichtung nach einem der Ansprüche 10, 11 und 13 bis 16, deren Rotationswärmeaustauscher (3) einen Strömungssektor (13) für den Kühlluftstrom (7) von ca. 60 Grad bis 120 Grad, vorzugsweise von 90 Grad, aufweist.

18. Kühlvorrichtung nach Anspruch 16 oder 17, bei der die Größe des dem Kühlluftstrom (7) zugeordneten Strömungssektors (13) so an den Anteil des Teilluftstroms (12) am Zuluftstrom (2) angepasst ist, dass die Strömungsgeschwindigkeit des Außenluft- (6) bzw. Zuluftstroms (2) im Rotationswärmeaustauscher (3) des des Kühlluft- (7) bzw. Fortluftstroms (9) entspricht.
